# EUROPÄISCHE PATENTSCHRIFT

(11) **EP 4 227 523 B1**
(45) Veröffentlichungstag und Bekanntmachung des Hinweises auf die Patenterteilung: **26.11.2025**
(21) Anmeldenummer: 22156723.3
(22) Anmeldetag: 15.02.2022
(51) Int. Cl.: F03D 7/02, F03D 7/04

(54) **VERFAHREN ZUM BETRIEB EINES WINDPARKS, WINDENERGIEANLAGE UND WINDPARK**
METHOD FOR OPERATION OF A WIND FARM, WIND ENERGY SYSTEM AND WIND FARM
PROCÉDÉ DE FONCTIONNEMENT D'UN PARC ÉOLIEN, ÉOLIENNE ET PARC ÉOLIEN

(43) Veröffentlichungstag der Anmeldung: 16.08.2023
(73) Patentinhaber: Wobben Properties GmbH, 26607 Aurich (DE)
(72) Erfinder: Messing, Ralf, 26605 Aurich (DE); Heyen, Malte, 26789 Leer (DE)
(74) Vertreter: Eisenführ Speiser

(56) Entgegenhaltungen:
- EP-A1- 3 536 948
- EP-A1- 3 926 162
- WO-A1-2019/138132
- WO-A1-2019/197680
- US-A1- 2009 099 702

## Beschreibung

Die vorliegende Erfindung betrifft ein Verfahren zum Betrieb eines Windparks, eine Windenergieanlage und einen Windpark.

Windenergieanlagen werden nur noch in seltenen Fällen als Einzelanlagen errichtet, sondern inzwischen meist in Form mehrerer Anlagen auf räumlich eng begrenzter Fläche. Eine solche Ansammlung von Windenergieanlagen wird als Windpark bezeichnet und der Abstand der einzelnen Windenergieanlagen untereinander beträgt dabei typischerweise nur wenige Vielfache des Anlagendurchmessers.

Bei einer kleinen Anlagenanzahl können die Anlagen noch in nur zwei Reihen hintereinander aufgestellt werden; handelt es sich jedoch um eine größere Anzahl von Anlagen in dem Windpark, müssen die Anlagen auch in drei oder mehr Reihen angeordnet werden. In einem solchen Windpark operiert die Einzelanlage nicht mehr unbeeinflusst, sondern wird je nach Windrichtung durch den Betrieb der Nachbaranlage gestört.

Besonders deutlich wird dies, wenn eine Anlage in einer bestimmten Windrichtung im Nachlauf einer anderen Anlage steht, also wenn die beiden Anlagen in Windrichtung hintereinander stehen. Dadurch, dass die vordere Anlage die Windgeschwindigkeit in der Rotorblattebene abbremst, um dem Wind kinetische Energie zu entziehen und in elektrische Energie umzuwandeln, steht der hinteren Anlage im Nachlauf der vorderen Anlage nun nur noch eine geringere Windgeschwindigkeit zur Erzeugung elektrischer Energie zur Verfügung. Darüber hinaus wird das Windfeld hinter der vorderen Anlage eine andere Form aufweisen als vor der vorderen Anlage hinsichtlich charakteristischer Windfeldparameter wie Turbulenzintensität, vertikaler und horizontaler Scherung, Windrichtung und Windrichtungsänderung über der Höhe.

Die Gesetzmäßigkeiten, die in einem Windpark gelten, unterscheiden sich also deutlich von denen an einer Einzelanlage, deren Anströmung nicht durch Hindernisse gestört ist. So wird zum Beispiel der Ertrag eines Windparks in der Regel nicht die Summe der Erträge der in dem Windpark bestehenden Einzelanlagen sein, wenn man für die Einzelanlage denjenigen Ertrag ansetzt, den sie in einem ungestörten Windfeld erzielt. Ebenso müssen typischerweise auch die Standsicherheit und die Lasten von Anlagen im Windpark geprüft werden, im Besonderen, wenn sie sich aufgrund der Windgegebenheiten im Nachlauf von anderen Anlagen befinden.

Nach Stand der Technik ist es des Öfteren notwendig, Anlagen im Windpark abzuregeln, damit die Standsicherheit und die Einhaltung der Auslegungslasten gegeben ist. Unter dem Abregeln der Anlage ist dann zu verstehen, dass zum Beispiel die Nennleistung respektive die Nenndrehzahl reduziert wird oder der Pitchwinkel erhöht wird. Dies kann wahlweise an der Anlage geschehen, die in der vorderen Reihe bezüglich der Anströmrichtung steht (passiver Schutz) oder in hinteren Reihen, also im Nachlauf einer anderen Anlage (aktiver Schutz).

Auch hinsichtlich einer Erhöhung des Parkertrages ist es Stand der Technik, Anlagen in der vorderen Reihe mit zum Beispiel erhöhtem Pitchwinkel zu betreiben, um die Verblockung in der Rotorblattebene zu reduzieren, also die axiale Induktion zu verringern, wodurch die Windgeschwindigkeit hinter der vorderen Anlage erhöht ist und damit der hinteren Anlage eine höhere Windgeschwindigkeit zur Energieumwandlung zur Verfügung steht. Zwar verringert sich der Ertrag der Anlagen in der vorderen Reihe, dieser Ertragsverlust soll jedoch durch erhöhte Erträge der Anlagen in den darauffolgenden Reihen im Windpark überkompensiert werden, sodass insgesamt der Windparkertrag steigt.

Das Dokument US 2009 / 099 702 A1 beschreibt ein System und Verfahren zur Erhöhung der Gesamtleistung eines Windparks unter Bedingungen, bei denen der von einer stromaufwärts gelegenen Turbine erzeugte Nachlauf die Leistungserzeugung einer stromabwärts gelegenen Turbine beeinflusst. Die Minimierung der Nachlaufeffekte, die von einer stromaufwärts gelegenen Turbine auf eine stromabwärts gelegene Turbine erzeugt werden, erhöht die Nettoleistung, die sowohl von der stromaufwärts als auch von der stromabwärts gelegenen Turbine erzeugt wird. Hierbei handelt es sich um die Implementierung eines Algorithmus zur Bestimmung der Reglereinstellungen einer oder mehrerer stromaufwärts gelegener Turbinen, um die Gesamtenergieausbeute der Turbinen im Windpark zu erhöhen. Der Algorithmus verringert auch die Ermüdungsbelastung der stromabwärts gelegenen Turbinen, indem er die durch die Nachlaufeffekte der stromaufwärts gelegenen Turbine verursachten Turbulenzen reduziert.

Das Dokument WO 2019 / 138 132 A1, beschreibt ein Verfahren zum Steuern einer Windenergieanlage und eine zugehörige Windenergieanlage. Die Windenergieanlage wird gemäß einem Betriebspunkt betrieben, wobei der Betriebspunkt wenigstens durch einen Pitchwinkel und eine Schnelllaufzahl bestimmt ist, wobei einer der Betriebspunkte einem maximalen Leistungsbeiwert entspricht, wobei die Windenergieanlage in einem Teillastbereich an einem Betriebspunkt betrieben wird, der von dem Betriebspunkt mit maximalem Leistungsbeiwert abweicht. Der Abstand des Betriebspunktes zu dem Betriebspunkt mit maximalem Leistungsbeiwert wird in Abhängigkeit von einem gemessenen Turbulenzmaß eingestellt.

Das Dokument WO 2019 / 197 680 A1 betrifft eine Windenergieanlage mit einer Nachlaufregelung, die dazu eingerichtet ist, die Windenergieanlage abhängig von an einer weiteren Windenergieanlage verursachten Nachlaufeffekten zu regeln, wobei die Nachlaufregelung dazu eingerichtet ist, basierend auf einem Turbulenzmesswert eines Turbulenzmesssensors der weiteren Windenergieanlage zu regeln. Das Dokument betrifft auch eine Windenergieanlage mit einem Turbulenzmesssensor, der dazu eingerichtet ist, einen Turbulenzmesswert zu bestimmen, wobei der Turbulenzmesswert für eine Turbulenz und/oder Windscherung an der Windenergieanlage indikativ ist, wobei die Windenergieanlage dazu eingerichtet ist, den Turbulenzmesswert zur Regelung der Windenergieanlage und/oder einer weiteren Windenergieanlage bereitzustellen.

Verschiedene Ansätze zur Optimierung der Regelung von Windenergieanlagen in einem Windpark wurden demnach versucht.

Vor diesem Hintergrund war es eine Aufgabe der vorliegenden Erfindung, ein Verfahren zum Betrieb eines Windparks, eine zugehörige Windenergieanlage und einen zugehörigen Windpark vorzuschlagen, mit dem eine Steigerung des Ertrags möglich ist.

Erfindungsgemäß wird die Aufgabe durch die unabhängigen Ansprüche gelöst. Bevorzugte Ausgestaltungen sind in den abhängigen Ansprüchen angegeben.

In einem Aspekt wird ein Verfahren zum Betrieb eines Windparks mit einer ersten Windenergieanlage und einer zweiten Windenergieanlage vorgeschlagen, wobei sich die zweite Windenergieanlage bei zumindest einer Nachlaufwindrichtung im Nachlauf der ersten Windenergieanlage befindet, wobei sich ein Schnelllaufkoeffizient aus dem Verhältnis einer zweiten Schnelllaufzahl der zweiten Windenergieanlage und einer ersten Schnelllaufzahl der ersten Windenergieanlage bestimmt und wobei sich ein Pitchwinkelkoeffizient aus dem Verhältnis eines zweiten Pitchwinkels der zweiten Windenergieanlage und eines ersten Pitchwinkels der ersten Windenergieanlage bestimmt.

Das Verfahren umfasst die Schritte: Bestimmen einer Turbulenzmaßzahl, insbesondere einer Turbulenzintensität, an der zweiten Windenergieanlage, und Betreiben der ersten Windenergieanlage und der zweiten Windenergieanlage bei der Nachlaufwindrichtung in einem Teillastbereich, wobei der Schnelllaufkoeffizient und/oder der Pitchwinkelkoeffizient eine Funktion der Turbulenzmaßzahl an der zweiten Windenergieanlage ist und größer eins beträgt.

Der Teillastbereich erstreckt sich in dieser Ausführung in einem Bereich von 0kW und der Nennleistung der Windenergieanlage. Er umfasst also sowohl einen Bereich mit bekanntermaßen näherungsweise konstanter Schnelllaufzahl als auch einen Bereich mit sich ver-ändernder Schnelllaufzahl.

Als Nachlaufwindrichtung ist insbesondere ein Windrichtungsbereich zu verstehen, in dem die in Windrichtung hintere Anlage durch die in Windrichtung vordere Anlage beeinflusst ist. Anders ausgedrückt liegt eine Nachlaufwindrichtung immer dann vor, wenn die Windenergieanlage, die sich im Nachlauf befindet, durch die Anwesenheit der in Windrichtung vorderen Anlage andere Windbedingungen erfährt, als eine frei angeströmte Anlage erfahren würde. Eine Nachlaufwindrichtung ist also eine Windrichtung, die innerhalb eines für die Nachlaufauswirkung relevanten Bereichs der Windrichtungen liegt.

Die anderen Windbedingungen, die durch den Nachlauf verursacht werden, können insbesondere eine andere Windgeschwindigkeit und/oder ein anderes Turbulenzmaß insbesondere eine andere Turbulenzintensität umfassen. Auch andere Parameter, wie eine ablenkungsbedingt andere Windrichtung, sind ebenfalls vorstellbar.

Die Schnelllaufzahl λ gibt das Verhältnis der Umfangsgeschwindigkeit u des Rotors zur Windgeschwindigkeit v an. Der Pitchwinkel bzw. Einstellwinkel bezeichnet den Winkel zwischen Rotorebene des Rotors der Windenergieanlage und Profilsehne des Rotorblatts.

Als Turbulenzmaßzahl eignet sich insbesondere eine Turbulenzintensität, wobei auch andere Maßzahlen wie ein Turbulenzgrad, der als dimensionslose Größe zur Beschreibung der Güte einer Außenströmung definiert ist, geeignet sind.

Die Turbulenzintensität ist vorzugsweise definiert als das Verhältnis der Standardabweichung der Windgeschwindigkeit zum Mittelwert der Windgeschwindigkeit bezogen auf Zeitintervalle von insbesondere 10 Minuten. Die Turbulenzintensität ist ein Maß für die Variabilität der Windgeschwindigkeit innerhalb dieser Zeiträume.

Erfindungsgemäß wird also erkannt, dass in dem Teillastbereich eine Schnelllaufzahl an der im Nachlauf der ersten Windenergieanlage stehenden zweiten Windenergieanlage mit Vorteil größer als die Schnelllaufzahl der ersten Windenergieanlage ist. Alternativ oder zusätzlich kann auch der Pitchwinkel an der zweiten Windenergieanlage mit analogem Vorteil größer als der Pitchwinkel an der ersten Windenergieanlage sein.

Der funktionale Zusammenhang zwischen der relativ erhöhten Schnelllaufzahl bzw. dem relativ erhöhten Pitchwinkel ist über die Turbulenzmaßzahl gegeben. Es hat sich erfindungsgemäß also gezeigt, dass eine optimierte Regelung des gesamten Windparks mit dem Ergebnis eines optimalen Ertrags eine fein differenzierte Nachlaufsteuerung erfordert.

So ist der relevante Faktor nicht die absolute Schnelllaufzahl bzw. der absolute Pitchwinkel an der ersten bzw. der zweiten Windenergieanlage, sondern deren Verhältnis zueinander. Vorteilhaft ist das Verhältnis derart, dass die zweite Windenergieanlage die höhere Schnelllaufzahl bzw. den höheren Pitchwinkel ansteuert. Dies kann dadurch geschehen, dass die zweite Windenergieanlage die Schnelllaufzahl und/oder den Pitchwinkel erhöht, alternativ oder zusätzlich kann auch die erste Windenergieanlage die Schnelllaufzahl und/oder den Pitchwinkel absenken bzw. jedenfalls weniger stark als die zweite Windenergieanlage anheben. Der Schnelllaufkoeffizient bzw. der Pitchwinkelkoeffizient größer eins ist demnach durch unterschiedlichste Regeleingriffe erreichbar.

Besonders bevorzugt wird bei dem Verfahren die Steuerung der zweiten Windenergieanlage die Schnelllaufzahl und den Pitchwinkel im Wesentlichen gleichzeitig mit dem Ziel anheben, dass ein Schubbeiwert des Rotors der zweiten Windenergieanlage im Wesentlichen unverändert bleibt. Damit kann die Ertragssteigerung im Windpark im Wesentlichen lastneutral erfolgen.

Zudem ist erfindungsgemäß wesentlich, dass der Schnelllaufkoeffizient und/oder der Pitchwinkelkoeffizient nicht nur größer eins sind, sondern zusätzlich eine Funktion der Turbulenzmaßzahl. Durch die funktionale Abhängigkeit von der Turbulenzmaßzahl wird die Einstellung des Schnelllaufkoeffizienten bzw. des Pitchwinkelkoeffizienten spezifisch angepasst und der Gesamtenergieertrag des Windparks erhöht.

Vorzugsweise wird die zweite Schnelllaufzahl derart erhöht, dass sich unter Berücksichtigung eines maximal zulässigen Schubbeiwertes ein maximierter Leistungsbeiwert der zweiten Windenergieanlage einstellt.

Besonders eine Erhöhung der Schnelllaufzahl kann mit einer betriebsführungsbedingten Lasterhöhung einher gehen. Diese kann nur insoweit zulässig sein, bis die auslegungsgemäßen Lasten der Anlage erreicht oder etwaige Restsicherheiten vollständig genutzt werden.

Die auslegungsgemäßen Lasten der Anlage werden jedenfalls eingehalten, wenn die Schnelllaufzahl, insbesondere die Kombination aus Schnelllaufzahl und Pitchwinkel, derart gewählt wird, dass an dem resultierenden Betriebspunkt der Schubbeiwert innerhalb eines zulässigen Bereiches liegt. Hierbei ist zu beachten, dass der Schubbeiwert nicht wesentlich vom Standardbetrieb abweichen darf, damit etwaig prognostizierte Lasten der Anlage selbst und der Anlagen, welche sich im Nachlauf dieser Anlage befinden, gültig bleiben.

Besonders bevorzugt wird die Schnelllaufzahl bzw. die Kombination aus Schnelllaufzahl und Pitchwinkel derart erhöht, dass der Schubbeiwert im Wesentlichen konstant bleibt. Damit wird ein leistungsmaximierter Betrieb unter Einhaltung der auslegungsgemäßen Lasten auch im Nachlauf einer Windenergieanlage erreicht.

Alternativ oder zusätzlich zum Schubbeiwert kann ein Vorwärts-Rückwärts Biegemoment des Turms der Windenergieanlage ermittelt werden, um auf den Schub rückzuschließen.

Vorzugsweise wird eine Erhöhung der Schnelllaufzahl derart beschränkt, dass die Nenndrehzahl nicht überschritten wird. Damit ist sichergestellt, dass es nicht zu einer Überdrehzahl der Windenergieanlage kommt.

Vorzugsweise wird die zweite Schnelllaufzahl und der zweite Pitchwinkel derart erhöht, dass sich unter Berücksichtigung eines maximal zulässigen Schubbeiwertes ein maximierter Leistungsbeiwert der zweiten Windenergieanlage einstellt.

Vorzugsweise ist der maximal zulässige Schubbeiwert ein standortabhängiger Schubbeiwert, der insbesondere von einer Luftdichte und/oder der Windgeschwindigkeit abhängt.

Weitere Einflussgrößen für den Schubbeiwert umfassen beispielsweise solche aus der Aerodynamik, der Regelung, daraus insbesondere Pitchwinkel und Drehmoment. Für den standortabhängigen Schubbeiwert sind besonders bevorzugt die Windgeschwindigkeit und die Luftdichte die maßgebenden Faktoren.

Vorzugsweise wird eine Entscheidung, ob der Pitchwinkelkoeffizient zusätzlich zu dem Schnelllaufkoeffizienten erhöht wird, in Abhängigkeit von Betriebsbedingungen am Ort der ersten und/oder zweiten Windenergieanlage getroffen.

Die Betriebsbedingungen am Ort der ersten und/oder der zweiten Windenergieanlage umfassen vorzugsweise Windbedingungen und Umwelt- bzw. Umgebungsbedingungen. Die Windbedingungen umfassen wenigstens eine aus einer nachlaufgestörten Turbulenz, der Windgeschwindigkeit, einer Schräganströmung, einem Höhenprofil der Windgeschwindigkeit und der Luftdichte. Die Umgebungsbedingungen umfassen vorzugsweise wenigstens eine aus Temperatur und Luftfeuchtigkeit, um beispielsweise eine mögliche Vereisung des Rotorblatts zu erkennen. Die genannten Bedingungen sind natürlich beispielhaft und nicht abschließend.

Die Daten zu den Betriebsbedingungen können in einer Ausführung auf einer Prognose, also insbesondere als Kombination von Statistik und Modellierung, basieren und/oder gemessen, insbesondere direkt gemessen oder indirekt gemessen, sein.

Vorzugsweise wird die Entscheidung in Abhängigkeit von Standortlasten am Ort und/oder dem Anlagentyp der zweiten Windenergieanlage getroffen.

In dieser Ausführung sind die Standortlasten insbesondere die auf die Anlagenstruktur der zweiten Windenergieanlage einwirkenden mechanische Lasten. Die mechanischen Lasten können in einer Ausführung auf einer Prognose, beispielsweise einer aeroelastischen Prognose, basieren oder gemessen, insbesondere direkt gemessen oder indirekt gemessen, sein.

Prinzipiell ist nur die hintere Anlage, also die zweite Windenergieanlage, relevant. Da diese Windenergieanlage jedoch vom Nachlauf der vorderen Anlage getroffen wird, sind die Standortlasten der hinteren Windenergieanlage auch von denen der vorderen Windenergieanlage abhängig.

Je kleiner der relative Abstand der ersten und zweiten Anlage, desto höher die Einwirkung aus Nachlaufturbulenz und entsprechend auch die Standortlasten. Vorzugsweise wird der relative Abstand zwischen den Windenergieanlagen demnach zur Korrektur oder Verbesserung der Standortlasten an der zweiten Windenergieanlage herangezogen.

Zudem gilt, dass je höher der Schubbeiwert der vorderen Anlage ist, desto höher die Nachlaufturbulenzen und demnach die Standortlasten. Auch die Nachlaufturbulenzen werden daher vorzugsweise zur Korrektur oder Verbesserung insbesondere der prognostizierten Standortlasten herangezogen.

Neben den Standortlasten spielen vorzugsweise die Reserven der Windenergieanlage eine Rolle, insbesondere die aerodynamischen Reserven sowie die lastentechnischen Reserven.

Vorzugsweise kann der zulässige Bereich der Erhöhung der Schnelllaufzahl und/oder des Pitchwinkels der zweiten Windenergieanlage über eine Life-Regelung, insbesondere einen zentralen Windparkrechner vorgegeben werden. Hierfür ist vorzugsweise der Netzeinspeisepunkt zu beachten bzw. zu überwachen. Zudem ist vorzugsweise eine jedenfalls näherungsweise in Echtzeit durchgeführte Lastüberwachung der zweiten Windenergieanlage heranzuziehen. In diesem Fall kann darüber der Betriebspunkt der zweiten Windenergieanlage, also insbesondere der zulässige Bereich der Erhöhung der Schnelllaufzahl und/oder des Pitchwinkels, für einen maximierten Leistungsbeiwert definiert werden.

Vorzugsweise wird für die bestimmte Turbulenzintensität an der zweiten Windenergieanlage ein maximaler Leistungsbeiwert bestimmt, wobei die zu dem maximalen Leistungsbeiwert gehörende Betriebspunkt die Betriebsparameter Schnelllaufzahl und Pitchwinkel bestimmt werden, wobei die zweite Windenergieanlage in dem Betriebspunkt mit maximalem Leistungsbeiwert betrieben wird, wenn der sich einstellende Schubbeiwert standortspezifisch zulässig ist.

Vorzugsweise wird bei der Einstellung der zweiten Schnelllaufzahl und/oder des zweiten Pitchwinkels eine Luftdichte berücksichtigt.

In einem weiteren Aspekt wird eine Windenergieanlage in einem Windpark vorgeschlagen, wobei der Windpark die Windenergieanlage und eine weitere Windenergieanlage enthält, wobei sich die Windenergieanlage bei zumindest einer Nachlaufwindrichtung im Nachlauf der weiteren Windenergieanlage befindet, wobei sich ein Schnelllaufkoeffizient aus dem Verhältnis einer Schnelllaufzahl der Windenergieanlage und einer Schnelllaufzahl der weiteren Windenergieanlage bestimmt und wobei sich ein Pitchwinkelkoeffizient aus dem Verhältnis eines Pitchwinkels der Windenergieanlage und eines Pitchwinkels der weiteren Windenergieanlage bestimmt, umfassend eine Steuerungsvorrichtung, die dazu ausgebildet ist, eine Turbulenzintensität an der Windenergieanlage zu bestimmen und die Windenergieanlage bei der Nachlaufwindrichtung in einem Teillastbereich derart zu betreiben, dass der Schnelllaufkoeffizient und/oder der Pitchwinkelkoeffizient eine Funktion der Turbulenzintensität an der zweiten Windenergieanlage ist und größer eins beträgt.

Die erfindungsgemäße Windenergieanlage gemäß diesem Aspekt ermöglicht, die gleichen Vorteile zu erreichen, wie sie mit Verweis auf das oben beschriebene Verfahren offenbart sind. Insbesondere wird ein Betrieb der Windenergieanlage in dem Windpark mit optimiertem Gesamtertrag ermöglicht.

Auch die Kombination der Windenergieanlage mit den als bevorzugt beschriebenen besonderen Ausgestaltungen des Verfahrens ist vorteilhaft.

In einem weiteren Aspekt wird ein Windpark mit einer Windenergieanlage nach dem vorigen Aspekt und einer weiteren Windenergieanlage vorgeschlagen.

Der erfindungsgemäße Windpark gemäß diesem Aspekt ermöglicht, die gleichen Vorteile zu erreichen, wie sie mit Verweis auf das oben beschriebene Verfahren bzw. die oben offenbarte Windenergieanlage offenbart sind. Insbesondere wird ein Betrieb des Windparks mit optimiertem Gesamtertrag ermöglicht.

Auch die Kombination des Windparks mit den als bevorzugt beschriebenen besonderen Ausgestaltungen des Verfahrens ist vorteilhaft.

Vorzugsweise ist die Steuerungsvorrichtung der Windenergieanlage bzw. einer der Windenergieanlagen des Windparks eingerichtet, die Schnelllaufzahl und/oder den Pitchwinkel derart zu erhöhen, dass sich ein maximal zulässiger Schubbeiwert der Windenergieanlage einstellt.

Vorzugsweise ist der maximal zulässige Schubbeiwert der Windenergieanlage bzw. einer der Windenergieanlagen des Windparks standortspezifisch und insbesondere von der Luftdichte abhängig.

Vorzugsweise umfasst die Windenergieanlage bzw. eine der Windenergieanlagen des Windparks eine Turbulenzmesseinheit zur Ermittlung einer Turbulenzintensität, wobei die Steuerungsvorrichtung eingerichtet ist, die ermittelte Turbulenzintensität bei einer Einstellung der Schnelllaufzahl und/oder des Pitchwinkels eines Rotors der Windenergieanlage zu berücksichtigen.

Sämtliche bekannte Einheiten zur Messung der Turbulenzintensität sind hierbei vorstellbar. Vorzugsweise wird die Turbulenzintensität aus der gemessenen Windgeschwindigkeit mit der Turbulenzmesseinheit abgeleitet. Besonders bevorzugt wird die Turbulenzintensität sogar räumlich aufgelöst an mehreren Orten berechnet. Die funktionale Abhängigkeit des Schnelllaufkoeffizienten bzw. des Pitchwinkelkoeffizienten kann dann direkt durch die mehreren Turbulenzintensitäten gegeben sein, alternativ kann ein einziger Mittel- bzw. Durchschnittswert, der die mehreren räumlich aufgelösten Turbulenzintensitäten repräsentiert, durch die Turbulenzmesseinheit bestimmt werden.

Vorzugsweise ist die Steuerungsvorrichtung der Windenergieanlage bzw. einer der Windenergieanlagen des Windparks eingerichtet, die Schnelllaufzahl und/oder den Pitchwinkel unter Berücksichtigung der Turbulenzintensität derart einzustellen, dass sich ein im Wesentlichen maximaler Leistungsbeiwert an einem Rotor der Windenergieanlage einstellt.

Vorzugsweise umfasst die Windenergieanlage bzw. eine der Windenergieanlagen des Windparks eine Luftdichtemesseinheit zur Ermittlung einer Luftdichte, wobei die Steuerungsvorrichtung eingerichtet ist, bei der Einstellung der Schnelllaufzahl und/oder des Pitchwinkels die ermittelte Luftdichte zu berücksichtigen.

Die vorliegende Offenbarung ist besonders auf drehzahlvariable, pitchgesteuerte Windkraftanlagen, die im Nachlauf von einer anderen Windkraftanlage betrieben werden, anwendbar. Die Anlagen müssen so betreibbar sein, dass sich Drehzahlen und Pitchwinkel unabhängig voneinander einstellen lassen. Die Anlagen müssen über einen Sensor zur Bestimmung einer Turbulenzintensität verfügen.

Nachfolgend wird die Erfindung exemplarisch anhand von Ausführungsformen unter Bezugnahme auf die begleitenden Figuren näher erläutert.
- Figur 1: zeigt schematisch und exemplarisch eine Windenergieanlage in einer perspektivischen Darstellung.
- Figur 2: zeigt schematisch und exemplarisch einen Windpark.
- Figur 3: zeigt schematisch und exemplarisch den Vergleich jeweils der Schnelllaufzahl und des Pitchwinkels über die Windgeschwindigkeit für vordere und hintere Windenergieanlagen.
- Fig. 4: zeigt schematisch und exemplarisch den Verlauf der Schnelllaufzahl und des Pitchwinkels am Punkt des maximalen Leistungskoeffizienten über einem Turbulenzmaß.
- Fig. 5: zeigt schematisch und exemplarisch Höhenlinien des Leistungskoeffizienten, des Schubkoeffizienten und des Verhältnisses daraus über Schnelllaufzahl und Pitchwinkel für eine erste Kombination aus Turbulenzintensität und Anlagentyp.
- Fig. 6: zeigt schematisch und exemplarisch Höhenlinien des Leistungskoeffizienten, des Schubkoeffizienten und des Verhältnisses daraus über Schnelllaufzahl und Pitchwinkel für eine zweite Kombination aus Turbulenzintensität und Anlagentyp.

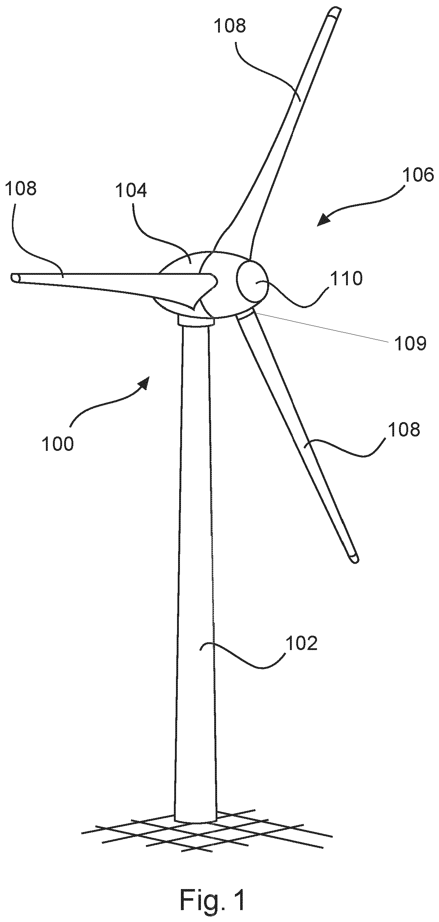

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

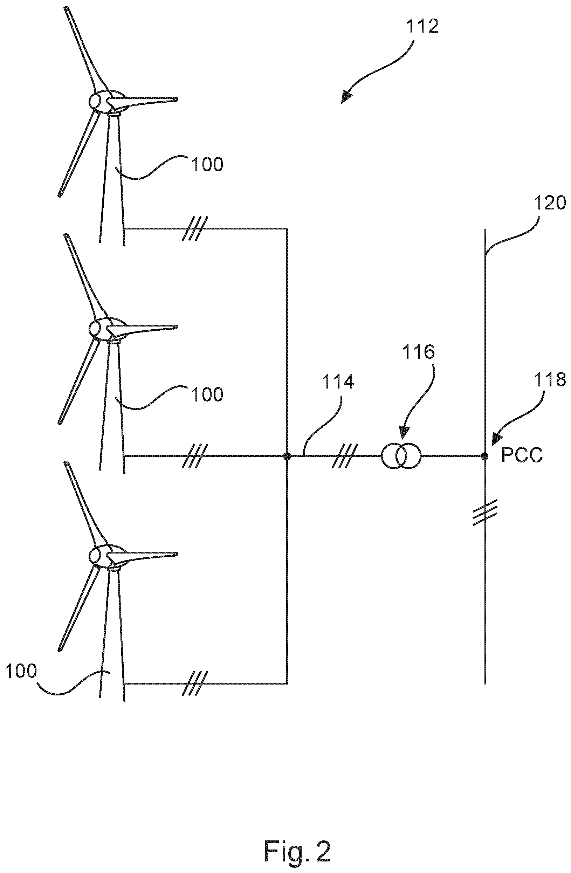

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Um den Ertrag von Windparks zu steigern, wird gemäß der vorliegenden Offenbarung ein alternatives Verfahren vorgeschlagen, welches Anwendung finden soll, sobald sich in einem Windpark 112 mindestens zwei Reihen von Windkraftanlagen befinden und damit die Anlagen der hinteren Reihe sich zumindest teilweise je nach Windrichtung im Nachlauf der Anlagen in der vorderen Reihe befinden.

Es wird hier vorgeschlagen, dass die Schnelllaufzahl λ im Teillastbereich der hinteren Anlagen größer ist als die Schnelllaufzahlen λ der vorderen Anlagen, also das Verhältnis der Schnelllaufzahlen im Teillastbereich der hinteren Anlagen zur vorderen Anlage immer größer eins ist.

Weiterhin wird vorgeschlagen, dass wahlweise weiterhin mit der Anhebung der Schnelllaufzahlen λ auch die Pitchwinkel γ im Teillastbereich von der vorderen Anlage zur hinteren Anlage angehoben werden.

Es wird also vorgeschlagen, dass die Windenergieanlage 100 in einem Windpark 112, die im Nachlauf einer anderen Windenergieanlage 100 steht, im Teillastbereich mit einer höheren Schnelllaufzahl λ und/oder mit einem höheren Pitchwinkel γ betrieben werden als die Anlagen, die vorgelagert im Wind stehen und den Nachlauf verursachen.

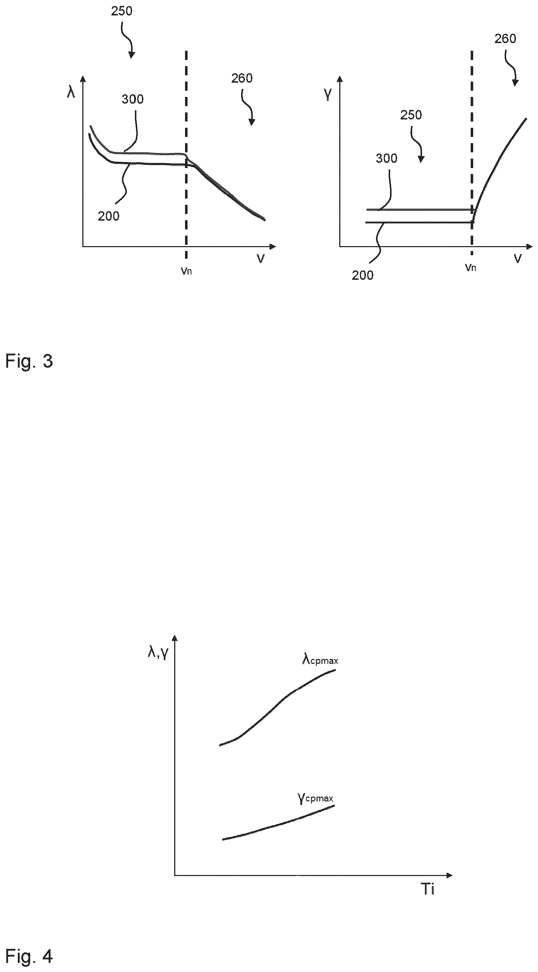

Fig. 3 zeigt schematisch und exemplarisch den Vergleich jeweils der Schnelllaufzahl λ und des Pitchwinkels γ auf der vertikalen Achse über die Windgeschwindigkeit v auf der horizontalen Achse für Anlagen in einem Windpark 112, wobei die Linien 200 die Betriebsführung für die Anlagen in der vorderen Reihe angeben, also für Anlagen, die in freien Anströmung stehen und die Linien 300 die Betriebsführung für Anlagen angeben, die in einer hinteren Reihe platziert sind, also im Nachlauf der Anlagen der vorderen Reihe.

Man erkennt, dass im erfindungsgemäßen Vorgehen vorgeschlagen wird, die Anlagen in der hinteren Reihe, vgl. Linie 300, mit einer höheren Schnelllaufzahl λ, bzw. mit einem höheren Pitchwinkel γ zu betreiben als die Anlagen in der vorderen Reihe, vgl. Linie 200. Diese Differenz liegt in einem Teillastbereich 250 mit Windgeschwindigkeiten v vor, die unterhalb einer Nennwindgeschwindigkeit vₙ liegen, bei der die Anlage mit Nennleistung betrieben wird.

Die Fig. 3 ist insgesamt schematisch zu verstehen und entsprechend ist auch die Nennwindgeschwindigkeit vₙ schematisch an einem Übergang zwischen Teillastbereich 250 und Volllastbereich 260 eingezeichnet. Während es in dem Volllastbereich 260 Windgeschwindigkeiten gibt, bei denen die Linien 200 und 300 gleich verlaufen, also die Betriebsführung der Anlagen in der hinteren Reihe gleich der Betriebsführung der Anlagen in der vorderen Reihe ist, liegt in dem Teillastbereich 250 ein Unterschied zwischen den jeweiligen Betriebsführungen vor, das heißt, dass die Linien 200 und 300 in dem Teillastbereich 250 unterschiedlich verlaufen.

Anders ausgedrückt wird vorgeschlagen, dass das Verhältnis der Schnelllaufzahlen λ bzw. die Pitchwinkel γ der hinteren Anlage zur vorderen Anlage immer größer eins ist. Die Anlage, die im Nachlauf einer anderen Anlage steht, soll also mit einer höheren Schnelllaufzahl und/oder höheren Pitchwinkeln betrieben werden als die Anlage, die den Nachlauf verursacht.

Das erfindungsgemäße Vorgehen wird vorgeschlagen, da davon auszugehen ist, dass die ebenso eingestellten Anlagen in der hinteren Reihe mehr Ertrag generieren als Anlagen, die in der hinteren Reihe mit im Vergleich zur vorderen Reihe identischen Schnelllaufzahlen λ und Pitchwinkeln γ betrieben werden.

Dem Vorschlag liegt die Erkenntnis zugrunde, dass ein Turbulenzmaß, beispielsweise durch die Turbulenzintensität ausgedrückt, im Nachlauf einer Anlage zunimmt, d.h. die Turbulenzintensität für die Anlagen der hinteren Reihe größer ist als die Turbulenzintensität der Anlagen der vorderen Reihe.

Des Weiteren wurde erkannt, dass der maximale Leistungsbeiwert eines Rotorblattes bzw. der gesamten Anlage sich mit zunehmender Turbulenzintensität zu höheren Schnelllaufzahlen λ bzw. höheren Pitchwinkeln γ verschiebt.

Fig. 4 zeigt schematisch und exemplarisch die Schnelllaufzahl λ_{cpmax} bzw. den Pitchwinkel γ_{cpmax} bei der jeweils der maximale Leistungsbeiwert des Rotorblattes vorliegt, aufgetragen über die Turbulenzintensität Ti des anströmenden Windes auf der horizontalen Achse.

Aus Fig. 4 wird ersichtlich, dass mit zunehmender Turbulenzintensität die Schnelllaufzahl λ bzw. der Pitchwinkel y, an dem das Rotorblatt den maximalen Leistungsbeiwert cₚₘₐₓ aufweist, zunimmt. Das heißt also, dass die Anlage, die im Nachlauf einer anderen steht und mit einer erhöhten Turbulenzintensität angeströmt wird, mit einer erhöhten Schnelllaufzahl und/oder einem erhöhten Pitchwinkel betrieben werden muss, um den maximalen Ertrag an den Anlagen in der hinteren Reihe zu ernten, also an dem maximalen Leistungsbeiwert cₚₘₐₓ betrieben zu werden.

Das konkrete Vorgehen im erfindungsgemäßen Vorschlag, im Besonderen, ob nur die Schnelllaufzahl angehoben wird oder die Schnelllaufzahl λ und zudem der Pitchwinkel γ, hängt von der Lastensituation am Standort ab, die berücksichtigt werden muss. Es ist gegebenenfalls damit zu rechnen, dass bei dem erfindungsgemäßen Vorschlag an den Anlagen in den hinteren Reihen vergleichsweise größere Lasten erzeugt werden. Damit ist vor allem zu rechnen, wenn nudie Schnelllaufzahl λ an den Anlagen der hinteren Reihe erhöht wird, der Pitchwinkel γ dahingegen unverändert bleibt.

Es kann allerdings auch eine kombiniertes Vorgehen von Erhöhung der Schnelllaufzahl und des Pitchwinkels gewählt werden, der ggf. zu keiner Erhöhung der Anlagenlasten führt. Der erfindungsgemäße Vorschlag ist an die Lastbedingungen am Standort des Windparks anzupassen und es ist standortspezifisch zu prüfen, welche Betriebsführung umgesetzt werden kann.

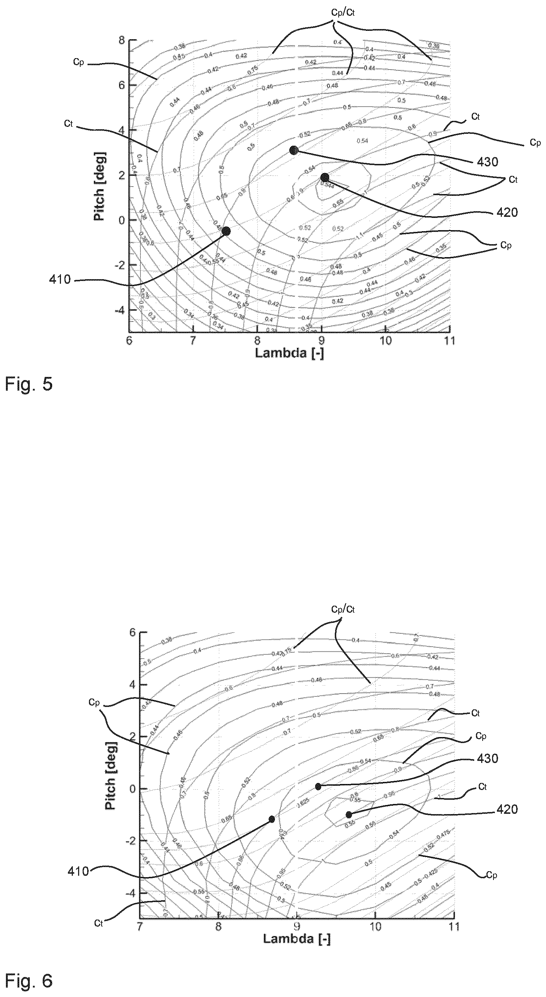

Fig. 5 zeigt schematisch und exemplarisch Höhenlinien der Leistungsbeiwerte cₚ, der Schubbeiwerte ct sowie des Verhältnisses aus Leistungs- und Schubbeiwert cₚ/cₜ über Schnelllaufzahl λ und Pitchwinkel γ für einen bestimmten Typ 1 von Windenergieanlagen 100 bei einer Turbulenzintensität Ti=A%, beispielsweise bei einer niedrigen Turbulenzintensität, bei der keine Nachlaufeffekte zu erwarten sind.

Fig. 6 zeigt schematisch und exemplarisch Höhenlinien der Leistungsbeiwerte cₚ, der Schubbeiwerte ct sowie des Verhältnisses aus Leistungs- und Schubbeiwert cₚ/cₜ über Schnelllaufzahl λ und Pitchwinkel γ für einen Typ 2 von Windenergieanlagen 100 bei Ti=B%.

Der Leistungsbeiwert cₚ ist eine dimensionslose Kennzahl einer Windkraftanlage. Er beschreibt zu jedem Zeitpunkt, welcher Anteil der im Wind enthaltenen Leistung in mechanische Leistung des Rotors umgewandelt werden kann bzw. in einem bestimmten Betriebspunkt wird. Der Leistungsbeiwert ist demnach keine konstante konstruktive Kennzahl, sondern abhängig von veränderlichen Einflussgrößen.

Die Leistung des Windes ist primär von der Windgeschwindigkeit abhängig. Die mechanische Leistung der Anlage wiederum ist abhängig von der Windgeschwindigkeit vor und hinter dem Rotor. Zudem sind die Leistung des Windes und die mechanische Leistung des Rotors von der Dichte der Luft und der Rotorkreisfläche abhängig. Vereinfacht lässt sich der Leistungsbeiwert daher durch die Windgeschwindigkeit vor und hinter dem Rotor berechnen. Nach dem Betz'schen Gesetz kann die Luft nicht vollständig abgebremst werden. Somit wird ein maximaler Leistungsbeiwert erreicht, wenn die Windgeschwindigkeit hinter dem Rotor einem Drittel der Windgeschwindigkeit vor dem Rotor entspricht. Aufgrund von Verlusten am Rotor erreichen Windenergiekonverter im regulären Betrieb jedoch nur Leistungsbeiwerte zwischen etwa 0,4 und etwa 0,5.

Der Rotorschub ist die Kraft, die horizontal von der Luftströmung auf die Nabe der Windenergieanlage 100 bzw. umgekehrt von der Windenergieanlage 100 auf die Strömung ausgeübt wird. Normiert mit der Axialkraft des Windes wird daraus der Schubbeiwert berechnet. Die Rückwirkung einer Windkraftanlage auf die Strömung hängt unter anderem von ihren dimensionslosen Schubbeiwerten cₜ ab. Schubbeiwerte sind deshalb wesentliche Eingabegrößen für die Modellierung der Abschattung in Windparks. Die verwendeten Schubbeiwerte werden in aller Regel von den Anlagenherstellern berechnet. Die höchsten Schubbeiwerte treten im Leistungsbetrieb bei niedrigen Windgeschwindigkeiten auf und sie fallen stetig bei mittleren und höheren Geschwindigkeiten. Demnach ist die gegenseitige Beeinflussung von Windenergieanlagen relativ gesehen bei niedrigen Windgeschwindigkeiten am größten. Da die im Wind enthaltene Energie dann aber gering ist und mit der Windgeschwindigkeit überproportional steigt, ist die absolute gegenseitige Beeinträchtigung letztlich bei mittleren Windgeschwindigkeiten am größten.

Fig. 5 und Fig. 6 sollen die gemachten Aussagen verdeutlichen. In den Abbildungen sind wie erwähnt jeweils Höhenlinien der aerodynamischen Leistungsbeiwerte cₚ, der Schubeiwerte cₜ und des Verhältnisses aus Leistungs- und Schubbeiwertes cₚ/cₜ über der Schnelllaufzahl und den Pitchwinkel aufgeführt. Die expliziten Werte, insbesondere die Werte für Pitchwinkel und Schnelllaufzahl, aber genauso die angegebenen Leistungsbeiwerte cₚ und Schubeiwerte cₜ, sind lediglich als Beispiele und nicht einschränkend zu verstehen.

Die Abbildungen sind für zwei unterschiedliche Anlagentypen und für unterschiedliche Turbulenzintensitäten Ti, die sich im Bereich 10% <Ti<30% bewegen, erstellt.

Der Punkt 410 in Fig. 5 und Fig. 6 gibt jeweils den Punkt des maximalen aerodynamischen Leistungsbeiwertes für die turbulenzfreie Anströmung mit Ti=0% an.

In Fig. 5 erkennt man zunächst, dass sich der maximale aerodynamische Leistungsbeiwert von der Schnelllaufzahl λ=7.5 und dem Pitchwinkel γ=-1° bei Ti=0%, dargestellt durch den Punkt 410, zu λ=9 und γ=1.5° bei Ti=A%, angedeutet durch Punkt 420, verschiebt.

Würde man die Anlage nun bei der Turbulenzintensität A% am Punkt 420 betreiben, würde sich auch der Schubbeiwert von ct=0.8 auf ct=0.9 erhöhen, das Verhältnis aus Leistungs- und Schubbeiwert (Höhenlinie cₚ/cₜ) würde jedoch konstant bleiben, demzufolge würde sich bei der Betriebsführungsänderung in der turbulenzreichen Anströmung der Leistungsbeiwert im selben Verhältnis wie der Schubbeiwert erhöhen.

Um also die Anlage auch bei Ti=A% im Leistungsmaximum betreiben zu können, müssen Umstände vorliegen, die die betriebsführungsbedingte Lasterhöhung ausgleichen wie beispielsweise ein Betrieb an einem dichtereduzierten Standort, an dem die auslegungsgemäßen Lasten der Anlage typischerweise nicht erreicht werden. Ist dies nicht der Fall, kommt alternativ ein Betrieb der Anlage am Punkt 430 bei λ=8.5 und y=3° in Frage. Der Punkt 430 wurde so gewählt, dass bei konstantem Schubbeiwert ct=0.8 das Verhältnis von cₚ/Cₜ maximal wird.

Der Punkt ist demnach so gewählt, dass bei Lastneutralität ein maximaler Leistungsbeiwert realisiert wird. Gegenüber dem Stand der Technik, in der der Betrieb der Anlage bei Anströmung mit erhöhter Ti=A% unverändert am Punkt 410 stattfinden würde, erhöht sich der aerodynamische Leistungsbeiwert signifikant.

Für den Anlagentyp 2 (Fig. 6) stellt sich die Situation insofern etwas unterschiedlich dar, da sich bei der Verschiebung des maximalen aerodynamischen Leistungsbeiwertes von turbulenzfreier Anströmung Ti=0%, wieder dargestellt durch Punkt 410, zu turbulenzreicher Anströmung mit Ti=B%, dargestellt durch Punkt 420, nur die Schnelllaufzahl λ ändert, der Pitchwinkel γ jedoch nahezu unverändert ist. Möchte man also die Anlage bei turbulenzreicher Anströmung im Leistungsoptimum betreiben, ist der entsprechende Anstieg des Schubbeiwertes ct standortspezifisch auf Zulässigkeit zu prüfen.

Für einen Betrieb auf konstantem Schubbeiwert ist wieder eine Kombination aus Schnelllaufzahl- und Pitchwinkelanstieg zu realisieren, hier in diesem Beispiel für Anlagentyp 2 auf etwa λ=9.25 und γ=0.3°, dargestellt durch Punkt 430 in Fig. 6. Für konstanten Schub ct=0.86 ist hier der Leistungsbeiwert maximal, jedoch geringer als das Optimum für diese Turbulenzintensität und weiterhin jedoch höher als im Betriebspunkt des Anlagentyps 2 bei turbulenzfreier Anströmung Ti=0%, also am Punkt 410.

Es ergibt sich also, dass je nach Standortlasten und Anlagentyp die Betriebsführung der Anlage unter Anströmbedingungen mit erhöhter Turbulenzintensität, beispielsweise in einem Windpark, wenn eine Anlage im Nachlauf einer anderen Anlage betrieben wird, hinsichtlich der Schnelllaufzahl und des Pitchwinkels im Teillastbereich abgestimmt werden muss, dergestalt, dass eine Schnelllaufzahlerhöhung oder eine kombinierte Erhöhung aus Schnelllaufzahl und Pitchwinkel durchgeführt wird. Besonders bevorzugt erfolgt die kombinierte Erhöhung als Funktion der Turbulenzintensität als dem Turbulenzmaß.

## Patentansprüche

1. Verfahren zum Betrieb eines Windparks (112) mit einer ersten Windenergieanlage (100) und einer zweiten Windenergieanlage (100), wobei sich die zweite Windenergieanlage (100) bei zumindest einer Nachlaufwindrichtung im Nachlauf der ersten Windenergieanlage (100) befindet, wobei sich ein Schnelllaufkoeffizient aus dem Verhältnis einer zweiten Schnelllaufzahl der zweiten Windenergieanlage (100) und einer ersten Schnelllaufzahl der ersten Windenergieanlage (100) bestimmt und wobei sich ein Pitchwinkelkoeffizient aus dem Verhältnis eines zweiten Pitchwinkels der zweiten Windenergieanlage (100) und eines ersten Pitchwinkels der ersten Windenergieanlage (100) bestimmt, umfassend die Schritte:
- Bestimmen einer Turbulenzmaßzahl, insbesondere einer Turbulenzintensität, an der zweiten Windenergieanlage (100),
**gekennzeichnet durch** das
- Betreiben der ersten Windenergieanlage (100) und der zweiten Windenergieanlage (100) bei der Nachlaufwindrichtung in einem Teillastbereich (250), wobei der Schnelllaufkoeffizient und/oder der Pitchwinkelkoeffizient eine Funktion der Turbulenzmaßzahl an der zweiten Windenergieanlage (100) ist und größer eins beträgt.

2. Verfahren nach Anspruch 1, wobei die zweite Schnelllaufzahl derart erhöht wird, dass sich unter Berücksichtigung eines maximal zulässigen Schubbeiwertes ein maximierter Leistungsbeiwert der zweiten Windenergieanlage einstellt.

3. Verfahren nach Anspruch 2, wobei die zweite Schnelllaufzahl und der zweite Pitchwinkel derart erhöht wird, dass sich unter Berücksichtigung eines maximal zulässigen Schubbeiwertes ein maximierter Leistungsbeiwert der zweiten Windenergieanlage (100) einstellt.

4. Verfahren nach Anspruch 3, wobei der maximal zulässige Schubbeiwert ein standortabhängiger Schubbeiwert ist, der insbesondere von einer Luftdichte und/oder der Windgeschwindigkeit abhängt.

5. Verfahren nach einem der vorstehenden Ansprüche, wobei eine Entscheidung, ob der Pitchwinkelkoeffizient zusätzlich zu dem Schnelllaufkoeffizienten erhöht wird in Abhängigkeit von Betriebsbedingungen am Ort der ersten und/oder zweiten Windenergieanlage (100) getroffen wird.

6. Verfahren nach Anspruch 5, wobei die Entscheidung in Abhängigkeit von Standortlasten am Ort und/oder dem Anlagentyp der zweiten Windenergieanlage (100) getroffen wird.

7. Verfahren nach einem der vorstehenden Ansprüche, wobei für die bestimmte Turbulenzintensität an der zweiten Windenergieanlage (100) ein maximaler Leistungsbeiwert bestimmt wird, wobei die zu dem maximalen Leistungsbeiwert gehörenden Betriebspunkt (430) die Betriebsparameter Schnelllaufzahl und Pitchwinkel bestimmt werden, wobei die zweite Windenergieanlage (100) in dem Betriebspunkt (430) mit maximalem Leistungsbeiwert betrieben wird, wenn der sich einstellende Schubbeiwert standortspezifisch zulässig ist.

8. Verfahren nach einem der vorstehenden Ansprüche, wobei bei der Einstellung der zweiten Schnelllaufzahl und/oder des zweiten Pitchwinkels eine Luftdichte berücksichtigt wird.

9. Windenergieanlage (100) in einem Windpark (112) mit der Windenergieanlage (100) und einer weiteren Windenergieanlage (100), wobei sich die Windenergieanlage (100) bei zumindest einer Nachlaufwindrichtung im Nachlauf der weiteren Windenergieanlage (100) befindet, wobei sich ein Schnelllaufkoeffizient aus dem Verhältnis einer Schnelllaufzahl der Windenergieanlage (100) und einer Schnelllaufzahl der weiteren Windenergieanlage (100) bestimmt und wobei sich ein Pitchwinkelkoeffizient aus dem Verhältnis eines Pitchwinkels der Windenergieanlage (100) und eines Pitchwinkels der weiteren Windenergieanlage (100) bestimmt, umfassend eine Steuerungsvorrichtung (103), die dazu ausgebildet ist, eine Turbulenzintensität an der Windenergieanlage (100) zu bestimmen und **gekennzeichnet dadurch, dass** die Steuerungsvorrichtung (103) dazu ausgebildet ist, die Windenergieanlage (100) bei der Nachlaufwindrichtung in einem Teillastbereich (250) derart zu betreiben, dass der Schnelllaufkoeffizient und/oder der Pitchwinkelkoeffizient eine Funktion der Turbulenzintensität an der zweiten Windenergieanlage (100) ist und größer eins beträgt.

10. Windpark (112) mit einer Windenergieanlage (100) nach Anspruch 9 und der weiteren Windenergieanlage (100).

11. Windenergieanlage (100) nach Anspruch 9 oder Windpark (112) nach Anspruch 10, wobei die Steuerungsvorrichtung (103) eingerichtet ist, die Schnelllaufzahl und/oder den Pitchwinkel derart zu erhöhen, dass sich ein maximal zulässiger Schubbeiwert der Windenergieanlage (100) einstellt.

12. Windenergieanlage (100) oder Windpark (112) nach einem der vorstehenden Ansprüche 9 bis 11, wobei der maximal zulässige Schubbeiwert standortspezifisch ist und insbesondere von der Luftdichte abhängt.

13. Windenergieanlage (100) oder Windpark (112) nach einem der vorstehenden Ansprüche 9 bis 12, umfassend eine Turbulenzmesseinheit zur Ermittlung einer Turbulenzintensität, wobei die Steuerungsvorrichtung (103) eingerichtet ist, die ermittelte Turbulenzintensität bei einer Einstellung der Schnelllaufzahl und/oder des Pitchwinkels eines Rotors (106) der Windenergieanlage (100) zu berücksichtigen.

14. Windenergieanlage (100) oder Windpark (112) nach einem der vorstehenden Ansprüche 9 bis 13, wobei die Steuerungsvorrichtung (103) eingerichtet ist, die Schnelllaufzahl und/oder den Pitchwinkel unter Berücksichtigung der Turbulenzintensität derart einzustellen, dass sich ein im Wesentlichen maximaler Leistungsbeiwert an einem Rotor (106) der Windenergieanlage (100) einstellt.

15. Windenergieanlage (100) oder Windpark (112) nach einem der vorstehenden Ansprüche 9 bis 14, umfassend eine Luftdichtemesseinheit zur Ermittlung einer Luftdichte, wobei die Steuerungsvorrichtung (103) eingerichtet ist, bei der Einstellung der Schnelllaufzahl und/oder des Pitchwinkels die ermittelte Luftdichte zu berücksichtigen.

## Claims

1. Method for operating a wind farm (112) having a first wind power installation (100) and a second wind power installation (100), wherein the second wind power installation (100) is located in the wake of the first wind power installation (100) in at least one wake wind direction, wherein a tip-speed coefficient is determined from the ratio of a second tip-speed ratio of the second wind power installation (100) and a first tip-speed ratio of the first wind power installation (100) and wherein a pitch-angle coefficient is determined from the ratio of a second pitch angle of the second wind power installation (100) and a first pitch angle of the first wind power installation (100), comprising the steps of:
- determining a turbulence metric, in particular a turbulence intensity, at the second wind power installation (100),
**characterized by**
- operating the first wind power installation (100) and the second wind power installation (100) in the wake wind direction in a part-load range (250), wherein the tip-speed coefficient and/or the pitch-angle coefficient are/is a function of the turbulence metric at the second wind power installation (100) and are/is greater than one.

2. Method according to Claim 1, wherein the second tip-speed ratio is increased in such a way that a maximized power coefficient of the second wind power installation is obtained in consideration of a maximum permissible thrust coefficient.

3. Method according to Claim 2, wherein the second tip-speed ratio and the second pitch angle are increased in such a way that a maximized power coefficient of the second wind power installation (100) is obtained in consideration of a maximum permissible thrust coefficient.

4. Method according to Claim 3, wherein the maximum permissible thrust coefficient is a location-dependent thrust coefficient which is dependent in particular on an air density and/or the wind speed.

5. Method according to one of the preceding claims, wherein a decision about whether the pitch-angle coefficient is increased in addition to the tip-speed coefficient is made depending on operating conditions at the site of the first and/or second wind power installation (100).

6. Method according to Claim 5, wherein the decision is made depending on location loads at the site and/or on the installation type of the second wind power installation (100).

7. Method according to one of the preceding claims, wherein a maximum power coefficient is determined for the determined turbulence intensity at the second wind power installation (100), wherein the operating point (430) related to the maximum power coefficient the operating parameters tip-speed ratio and pitch angle are determined, wherein the second wind power installation (100) is operated at the operating point (430) having the maximum power coefficient if the thrust coefficient obtained is permissible at the specific location.

8. Method according to one of the preceding claims, wherein an air density is taken into consideration when setting the second tip-speed ratio and/or the second pitch angle.

9. Wind power installation (100) on a wind farm (112) having the wind power installation (100) and a further wind power installation, wherein the wind power installation (100) is located in the wake of the further wind power installation (100) in at least one wake wind direction, wherein a tip-speed coefficient is determined from the ratio of a tip-speed ratio of the wind power installation (100) and a tip-speed ratio of the further wind power installation (100) and wherein a pitch-angle coefficient is determined from the ratio of a pitch angle of the wind power installation (100) and a pitch angle of the further wind power installation (100), comprising a control apparatus (103) which is designed to determine a turbulence intensity at the wind power installation (100) and **characterized by** that the control apparatus (103) is configured to operate the wind power installation (100) in the wake wind direction in a part-load range (250) in such a way that the tip-speed coefficient and/or the pitch-angle coefficient are/is a function of the turbulence intensity at the wind power installation (100) and are/is greater than one.

10. Wind farm (112) having a wind power installation (100) according to Claim 9 and the further wind power installation (100).

11. Wind power installation (100) according to Claim 9 or wind farm (112) according to Claim 10, wherein the control apparatus (103) is configured to increase the tip-speed ratio and/or the pitch angle in such a way that a maximum permissible thrust coefficient of the wind power installation (100) is obtained.

12. Wind power installation (100) or wind farm (112) according to one of preceding Claims 9 to 11, wherein the maximum permissible thrust coefficient is location-specific and is dependent in particular on the air density.

13. Wind power installation (100) or wind farm (112) according to one of preceding Claims 9 to 12, comprising a turbulence measuring unit for ascertaining a turbulence intensity, wherein the control apparatus (103) is configured to take the ascertained turbulence intensity into consideration when setting the tip-speed ratio and/or the pitch angle of a rotor (106) of the wind power installation (100).

14. Wind power installation (100) or wind farm (112) according to one of preceding Claims 9 to 13, wherein the control apparatus (103) is configured to set the tip-speed ratio and/or the pitch angle in consideration of the turbulence intensity in such a way that a substantially maximum power coefficient at a rotor (106) of the wind power installation (100) is obtained.

15. Wind power installation (100) or wind farm (112) according to one of preceding Claims 9 to 14, comprising an air density measuring unit for ascertaining an air density, wherein the control apparatus (103) is configured to take the ascertained air density into consideration when setting the tip-speed ratio and/or the pitch angle.

## Revendications

1. Procédé destiné à faire fonctionner un parc éolien (112) avec une première éolienne (100) et une deuxième éolienne (100), dans lequel la deuxième éolienne (100) se trouve en aval de la première éolienne (100) dans au moins une direction de vent en aval, dans lequel un coefficient de fonctionnement rapide est déterminé à partir du rapport entre une deuxième vitesse de fonctionnement rapide de la deuxième éolienne (100) et une première vitesse de fonctionnement rapide de la première éolienne (100) et dans lequel un coefficient d'angle de pas est déterminé à partir du rapport d'un deuxième angle de pas de la deuxième éolienne (100) et d'un premier angle de pas de la première éolienne (100), comprenant les étapes :
- de détermination d'une mesure de turbulence, en particulier d'une intensité de turbulence, sur la deuxième éolienne (100),
**caractérisé par** :
- le fonctionnement de la première éolienne (100) et de la deuxième éolienne (100) dans la direction du vent en aval dans une plage de charge partielle (250), dans lequel le coefficient de fonctionnement rapide et/ou le coefficient d'angle de pas sont une fonction de la mesure de turbulence sur la deuxième éolienne (100) et sont supérieurs à un.

2. Procédé selon la revendication 1, dans lequel la deuxième vitesse de fonctionnement rapide est augmentée de telle manière qu'un coefficient de puissance maximisé de la deuxième éolienne est réglé en tenant compte d'un coefficient de poussée maximal admissible.

3. Procédé selon la revendication 2, dans lequel la deuxième vitesse de fonctionnement rapide et le deuxième angle de pas sont augmentés de telle manière qu'un coefficient de puissance maximisé de la deuxième éolienne (100) est réglé en tenant compte d'un coefficient de poussée maximal admissible.

4. Procédé selon la revendication 3, dans lequel le coefficient de poussée maximal admissible est un coefficient de poussée dépendant de l'emplacement qui dépend en particulier d'une densité de l'air et/ou de la vitesse du vent.

5. Procédé selon l'une quelconque des revendications précédentes, dans lequel une décision de si le coefficient d'angle de pas est augmenté en plus du coefficient de fonctionnement rapide en fonction de conditions de fonctionnement sur le site de la première et/ou de la deuxième éolienne (100) est prise.

6. Procédé selon la revendication 5, dans lequel la décision est prise en fonction de charges sur le site et/ou du type d'installation de la deuxième éolienne (100).

7. Procédé selon l'une quelconque des revendications précédentes, dans lequel un coefficient de puissance maximal est déterminé pour l'intensité de turbulence déterminée sur la deuxième éolienne (100), dans lequel les paramètres de fonctionnement, vitesse de fonctionnement rapide et angle de pas sont déterminés pour le point de fonctionnement (430) appartenant au coefficient de puissance maximal, dans lequel la deuxième éolienne (100) fonctionne au point de fonctionnement (430) à un coefficient de puissance maximal lorsque le coefficient de poussée qui s'établit est autorisé en fonction du site.

8. Procédé selon l'une quelconque des revendications précédentes, dans lequel une densité d'air est prise en compte lors du réglage de la deuxième vitesse de fonctionnement rapide et/ou du deuxième angle de pas.

9. Éolienne (100) dans un parc éolien (112) avec l'éolienne (100) et une autre éolienne (100), dans laquelle l'éolienne (100) se trouve en aval de l'autre éolienne (100) dans au moins une direction de vent en aval, dans laquelle un coefficient de fonctionnement rapide est déterminé à partir du rapport entre une vitesse de fonctionnement rapide de l'éolienne (100) et une vitesse de fonctionnement rapide de l'autre éolienne (100) et dans laquelle un coefficient d'angle de pas est déterminé à partir du rapport d'un angle de pas de l'éolienne (100) et d'un angle de pas de l'autre éolienne (100), comprenant un dispositif de commande (103) qui est réalisé pour déterminer une intensité de turbulence sur l'éolienne (100) et **caractérisée en ce que** le dispositif de commande (103) est réalisé pour commander l'éolienne (100) dans la direction de vent en aval dans une plage de charge partielle (250) de telle manière que le coefficient de fonctionnement rapide et/ou le coefficient d'angle de pas sont une fonction de l'intensité de turbulence sur la deuxième éolienne (100) et sont supérieurs à un.

10. Parc éolien (112) avec une éolienne (100) selon la revendication 9 et l'autre éolienne (100).

11. Éolienne (100) selon la revendication 9 ou parc éolien (112) selon la revendication 10, dans laquelle/lequel le dispositif de commande (103) est mis au point pour augmenter la vitesse de fonctionnement rapide et/ou l'angle de pas de manière à régler un coefficient de poussée maximal admissible de l'éolienne (100).

12. Éolienne (100) ou parc éolien (112) selon l'une quelconque des revendications 9 à 11 précédentes, dans laquelle/lequel le coefficient de poussée maximal admissible est spécifique au site et dépend en particulier de la densité de l'air.

13. Éolienne (100) ou parc éolien (112) selon l'une quelconque des revendications 9 à 12 précédentes, comprenant une unité de mesure de turbulence pour déterminer une intensité de turbulence, dans laquelle/lequel le dispositif de commande (103) est mis au point pour prendre en compte l'intensité de turbulence déterminée lors d'un réglage de la vitesse de fonctionnement rapide et/ou de l'angle de pas d'un rotor (106) de l'éolienne (100).

14. Éolienne (100) ou parc éolien (112) selon l'une quelconque des revendications 9 à 13 précédentes, dans laquelle/lequel le dispositif de commande (103) est mis au point pour régler la vitesse de fonctionnement rapide et/ou l'angle de pas en tenant compte de l'intensité de turbulence de manière à régler un coefficient de puissance sensiblement maximal sur un rotor (106) de l'éolienne (100).

15. Éolienne (100) ou parc éolien (112) selon l'une quelconque des revendications 9 à 14 précédentes, comprenant une unité de mesure de densité de l'air pour déterminer une densité de l'air, dans laquelle/lequel le dispositif de commande (103) est mis au point pour prendre en compte la densité de l'air déterminée lors du réglage de la vitesse de fonctionnement rapide et/ou de l'angle de pas.
